Europäisches Patentamt

European Patent Office

Office européen des brevets

(11) Publication number: **0 186 908**
A2

(12) # EUROPEAN PATENT APPLICATION

(21) Application number: 85116585.2

(51) Int. Cl.⁴: **F 16 F 9/46**, B 60 G 17/08

(22) Date of filing: 27.12.85

(30) Priority: 25.12.84 JP 276512/84

(43) Date of publication of application: 09.07.86
Bulletin 86/28

(84) Designated Contracting States: DE FR GB

(71) Applicant: TOYOTA JIDOSHA KABUSHIKI KAISHA, 1,
Toyota-cho Toyota-shi, Aichi-ken 471 (JP)

(72) Inventor: Asami, Ken, 5-38, Yamate-Dori Showa-ku,
Nagoya-shi Aichi-ken (JP)
Inventor: Ohashi, Kaoru, 36-3, Yokodaido, Miai-cho,
Okazaki-shi Aichi-ken (JP)
Inventor: Onuma, Toshio, 2016-150, Chabatake,
Susono-shi Shizuoka-ken (JP)
Inventor: Buma, Shuuichi, 114-233, Sakanose
Kosema-cho, Toyota-shi Aichi-ken (JP)

(74) Representative: Tiedtke, Harro, Dipl.-Ing. et al,
Patentanwaltsbüro Tiedtke-Bühling-Kinne-
Grupe-Pellmann-Grams-Struif
Bavariaring 4 Postfach 20 24 03, D-8000 München 2 (DE)

(54) **Shock absorber controller.**

(57) This invention relates to a shock absorber controller for a shock absorber of a rear wheel of a vehicle having a suspension between a vehicle body and the wheel. The controller detects the protrusions or sinkings of a road surface by measuring the distance between the vehicle body and a front wheel. If the detected protrusion or sinking is larger than the predetermined value, the damping force of rear shock absorber is immediately decreased. In the case of protrusion, the damping force of the shortened side of rear shock absorber is decreased, and in the case of sinking the damping force of the stretched side is decreased. Moreover, the alteration means to change the damping force to a plurality of phases in accordance with the condition of the road surface is available in addition to the restoring means. It is effective to install the aforementioned equipment in the left and right sides of a vehicle body respectively, having a suspension between a vehicle body and the rear wheel. The controller detects the distance between the vehicle body and a front wheel, and judges if the front wheel is rising or sinking to decrease the damping force of shock absorber of rear wheel to stretching side or shrinking side in accordance with the degree of the rising and sinking of the front wheel.

TITLE OF THE INVENTION

SHOCK ABSORBER CONTROLLER

BACKGROUND OF THE INVENTION

Technical Field

The present invention relates to a shock absorber controller of rear wheels for a vehicle, particularly to a shock absorber controller of rear wheels available for a sporadic shock due to a protrusion or sinking of a road surface on which the vehicle is running.

Prior Art

The damping force of a shock absorber of various suspension systems between wheels and a vehicle body is altered and controlled depending on the condition of the road surface or the moving condition of the vehicle, not only to prevent a vehicle from having shocks or vibration but also to assure a good operating property and stability. For example, altering the damping force of a shock absorber depending on the condition of the road surface, was proposed in the Published Unexamined Patent Application No. Sho-58-30542 and No. Sho-59-23712.

In the abovementioned control, the damping force of the shock absorber is changed when the bad driving condition of the road surface is detected by a vehicle height sensor and when the nose dive or the squat is detected by a brake sensor or an accelerator sensor, to maintain the operating property and the stability on the bad driving condition and to prevent the nose dive or the squat.

However, in the prior art, only if the large alteration is continuously detected by the vehicle height sensor, it is judged that the vehicle is running on a bad road and the prescribed effect is produced, or the damping force of the shock absorber of all wheels is increased. However, in case that the vehicle is getting over other shocks such as a joint of road patches, a sporadic protrusion or sinking, the damping force of the shock absorber is not altered by the conventional control because the vehicle receives only a single shock but resumes the smooth driving.

For that reason, there is a problem that the abovementioned conventional control can not prevent occupants from having an unpleasant shock caused by the sporadic protrusion or sinking which is different from the shock on the bad road which has consecutive irregularities, deteriorating not only the feel of the ride but also the operating property and stability, vibration and noise characteristic in getting over the sporadic protrusion or sinking.

SUMMARY OF THE INVENTION

Accordingly, the primary object of this invention is to provide a novel shock absorber controller of rear wheels, which properly controls a rear shock absorber of a vehicle with a shock absorber between a vehicle body and its rear wheels, when the vehicle is getting over a sporadic protrusion or sinking of the road surface like a joint of road patches, to minimize vibration and noise and to provide occupants with a pleasant feel of the ride.

The second object of this invention is to provide a shock absorber controller of rear wheels, which assures a pleasant feel, a good operating property and stability even though the vehicle is driving on the normal road surface after rear wheels getting over the abovementioned sporadic protrusion or sinking.

The third object of this invention is to provide a shock absorber controller of rear wheels, which performs a series of controls as mentioned above depending on the scale of the protrusion or sinking, to assure a better feel of the ride, a better operating property and stability when the vehicle is getting over the sporadic protrusion or sinking of larger scale.

According to this invention, the shock absorber controller of rear wheels for the vehicle with shock absorbers between the vehicle body and its rear wheels includes the following means, in order to attain these objects:

front vehicle height detection means for generating a

3

height signal indicating the distance between the vehicle body and a front wheel;

rising judgment means for generating a rising signal indicating the vehicle is getting over a protrusion of larger scale which exceeds the predetermined range, on the basis of the abovementioned front vehicle height signal;

sinking judgment means for generating a sinking signal indicating the vehicle is falling in a sinking of larger scale which exceeds the predetermined range, on the basis of the abovementioned front vehicle height signal;

damping force alteration means for altering a damping force of the stretched side and the shortened side of rear shock absorber, respectively; and

control means for controlling the damping force alteration means to decrease the damping force of the shortened side in accordance with the rising signal and to decrease the damping force of the stretched side in accordance with the sinking signal.

The action of abovementioned means is hereinafter described. When the front wheels are running on the protrusion of the road surface, the front vehicle height detection means by which the distance between the front wheel and the vehicle body is detected to be smaller, generates the reference front vehicle height signal. The rising judgment means detects the difference between the value and an average value of the front vehicle height after receiving the front vehicle height signal. The average value of the front vehicle height is, for example, the average value of the front vehicle height within the preset time interval or the momentary value of low frequency component of the original front vehicle height wave. When the front wheels are rising the protrusion of the road surface, the difference is to be negative. When the difference is negative and the absolute value is more than the preset standard value, the rising judgment means generates the rising judgment signal.

When the difference between the value of the front vehicle height signal and that of the average front vehicle height is positive and the absolute value is more than the preset standard value, the sinking judgment means judges the front wheels fall in the sinking of the road surface to generate the sinking judgment signal.

When the rising judgment signal is received, namely, when the front wheels run on the larger protrusion than the prescribed one, the control means decreases the rear suspension shock absorber damping force in its shortened side. When the rear wheels run on the protrusion, the impact is to be absorbed by the rear suspension and not to be transmitted to the vehicle body. Therefore, the occupants feel little impact and less noise.

When the sinking judgment signal is received, namely, when the front wheels run on the larger sinking than the prescribed one, the control means decreases the rear suspension shock absorber damping force in its stretched side. The rear wheel shock absorber damping force alteration means changes the damping force of the rear suspension shock

5

absorber in both its stretched and shortened sides respectively depending on the control signal from the control means. Concretely, in an oil hydraulic shock absorber which is utilizing a throttle resistance, i.e., the resistance of which a high viscosity oil is passing through the narrow passage, as a damping force, the damping force can be lowered in such ways as widening the sectional area of the passage or increasing the number of passages. However, this invention is not limited to the oil hydraulic shock absorber but available to other systems to decrease the damping force.

Other than the abovementioned means, this invention may include a restored means to restore the damping force of the rear shock absorber in its shortened and stretched sides after a preset time has elapsed since the rising and sinking judgment signals are generated. In this case, the damping force of the shock absorber can be suitable for the operating property and stability of the vehicle after both front and rear wheels are getting over the protrusion or sinking.

If the abovementioned means are performed in the right and the left sides respectively, the pleasant feel of the ride can be assured even though the protrusion or sinking is detected by one of the wheels. Namely, when the right front wheel is judged to be rising or sinking, the damping force of the right rear shock absorber is controlled, and in the case of the left front wheel, the damping force of the left rear shock absorber is controlled.

Moreover, if the rising or the sinking judgment signals of various kinds are generated depending on the front vehicle height signal and the damping force of the rear shock absorber is changed in a plurality of phases, the combinaion of the best feel of the ride, the operating property and stability depending on the scale of the sporadic protrusion and sinking can be selected.

BRIEF DESCRIPTION OF THE DRAWINGS

A more complete appreciation of the invention and many of the attendant advantages thereof will be readily obtained as the same becomes better understood by reference to the following detailed description when considered in connection with the accompanying.

Fig. 1 is a schematic block diagram showing a sole embodiment of the present invention.

Fig. 2 is a schematic block diagram for explaining the effect of each means in the embodiment.

Fig. 3 is a system diagram concretely showing devices in the embodiment.

Fig. 4 is a perspective view including a part of a perspective view of the main part of a damping force changing actuator to which the embodiment is applied.

Figs. 5A, 5B, 5C and 5D are sectional views showing the system of a shock absorber to which the embodiment is applied.

Figs. 6A, 6B and 6C are explanatory diagrams showing the condition of the normal damping force of the shock absorber.

7

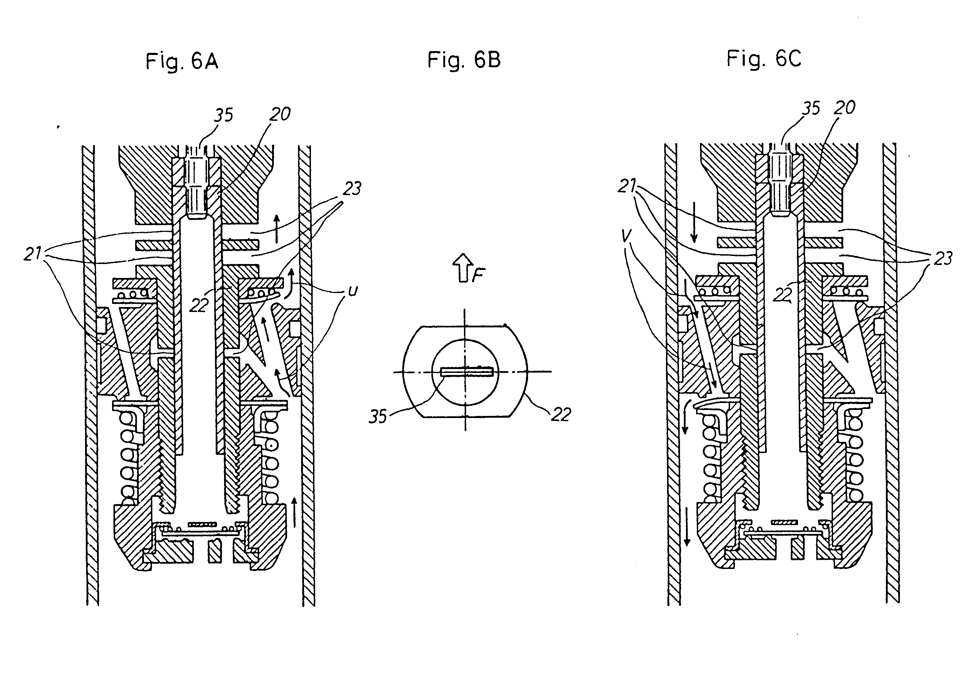

Figs. 6A and 6C are sectional views of the shortened and the stretched conditions of the shock absorber respectively, and Fig. 6B is a plan view of the shock absorber in the abovementioned conditions.

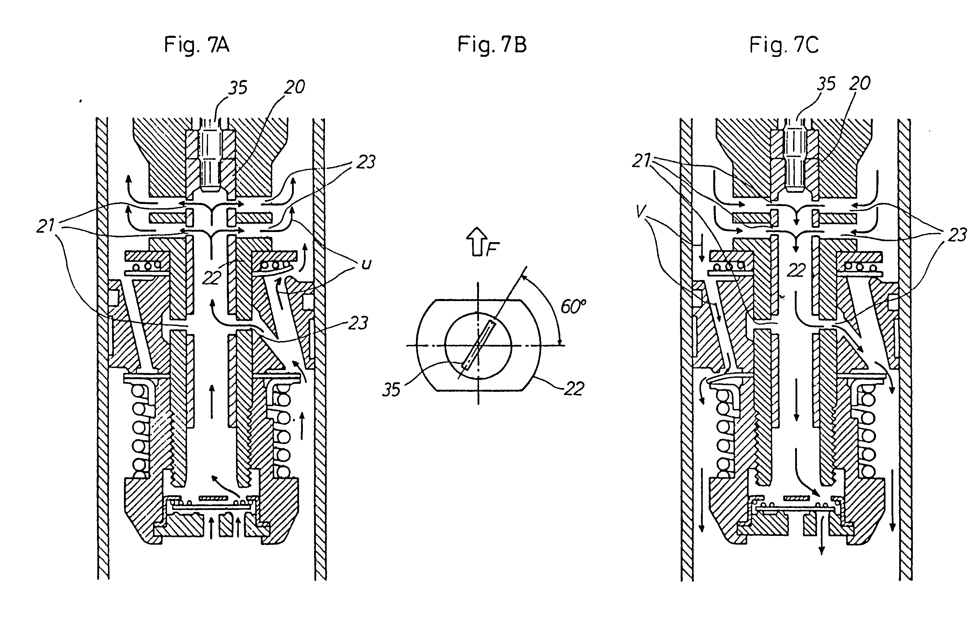

Figs. 7A, 7B and 7C are explanatory diagrams showing the condition of the low damping force of the shock absorber. Figs. 7A, 7B and 7C show the same condition as Figs. 6A, 6B and 6C, respectively.

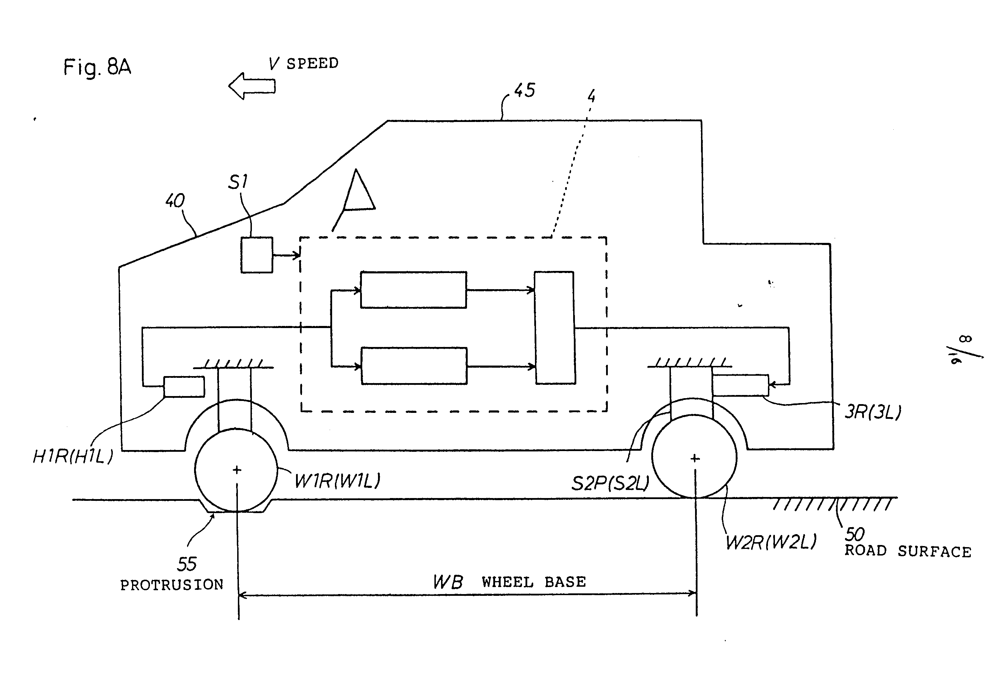

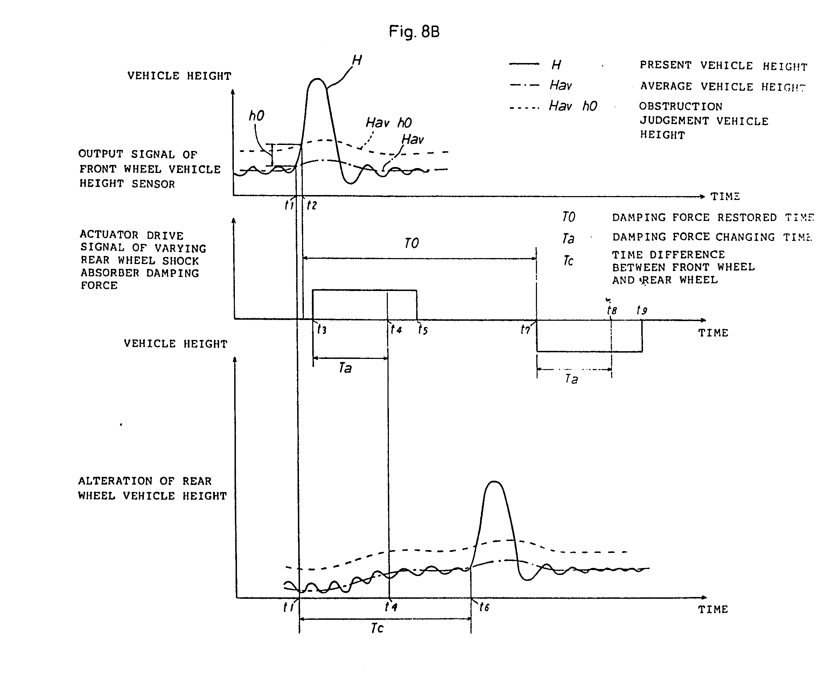

Fig. 8A is a schematic block diagram showing the condition of a vehicle getting over a sinking of a road surface in this embodiment, and Fig. 8B is a time chart showing a front vehicle height signal, a shock absorber control signal, and a rear vehicle height value depending on the lapse of time.

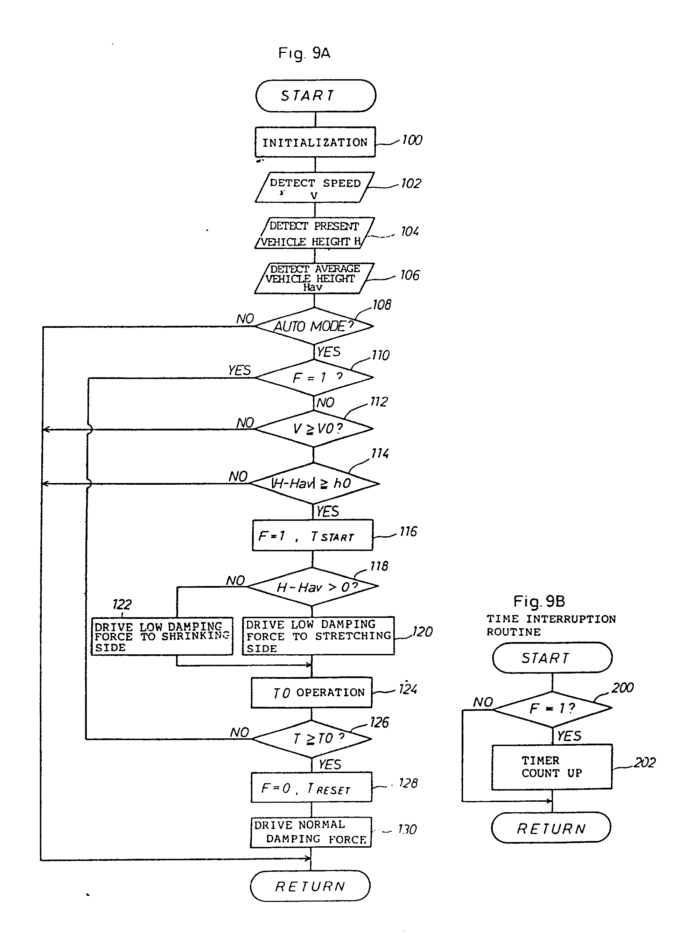

Figs. 9A and 9B are flowcharts showing a series of processing steps and a time interruption routine respectively in this embodiment.

DETAILED DESCRIPTION OF PREFERRED EMBODIMENTS

Referring now to the drawings, wherein like reference numerals designate identical or corresponding parts throughout the several views.

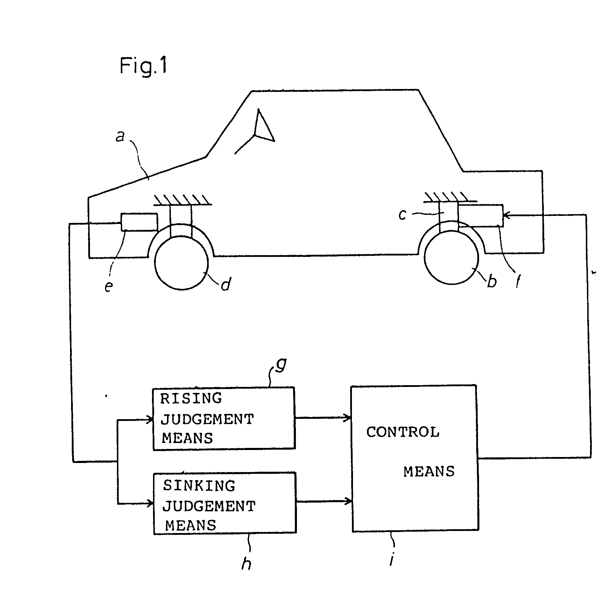

Fig. 1 shows a schematic block diagram of this embodiment. A front vehicle height detection means (e) by which the distance between a vehicle body (a) and a front wheel (d) is detected. The front vehicle height detection means (e) connects with a rising judgment means (g) and a sinking judgment means (h) via signal line, so that a signal is to be sent from the rising and sinking judgment means (g) and (h) to a control means (i), from which the signal is to be sent to a rear shock absorber damping force alteration means (f) which alters a damping force of a shock absorber (c) between the vehicle body (a) and a rear wheel (b).

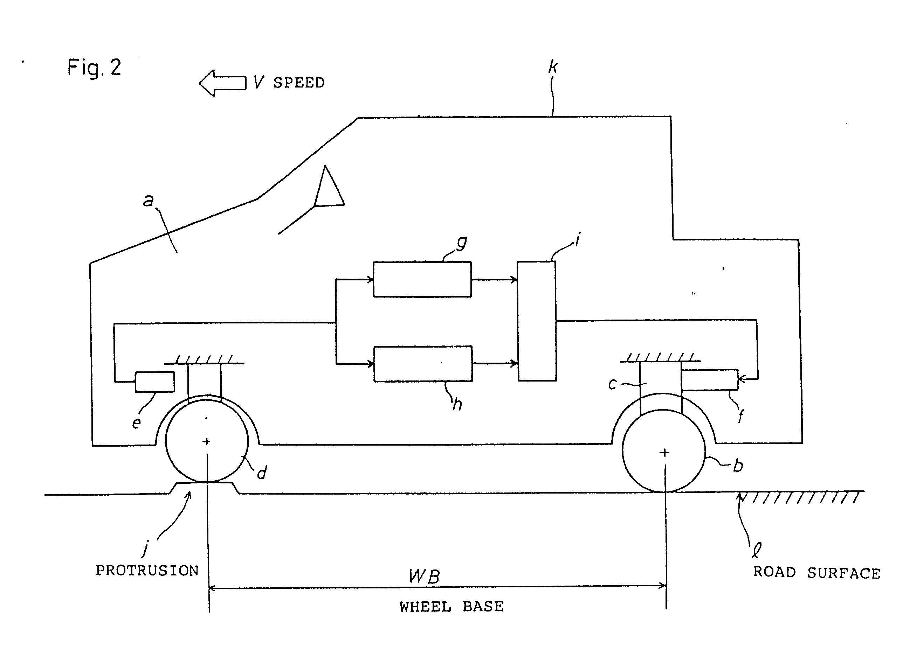

The effect of each means when a vehicle is getting over a protrusion is described as one example based on Fig. 2. When the front wheel (d) is running on a protrusion (j) of a road surface (l), the change of the vehicle height is detected by the front vehicle height detection means (e), which detects the distance between the front wheel (d) and the vehicle body (a). A vehicle height signal detected by the front vehicle height detection means (e) is inputted into the rising judgment means (g) and the sinking judgment (h). This judgment signal is inputted into the control means (i) which drives the rear shock absorber damping force alteration means (f) to decrease the damping force of the shock absorber (c) of the rear wheel (b) in its shortened side. The abovementioned judgment and control actions are accomplished before the rear wheel (b) is getting over the protrusion (j) since the front wheel (d) ran on the protrusion (j) of the road surface (l). For this reason, the rear wheel (b) passes the protrusion (j) of the road surface (l) on condition that the damping force of the shock absorber (c) is decreased in its shortened side.

The abovementioned case describes that a vehicle (k) is

9

getting over the protrusion (j) of the road surface (1). In this case of sinking, the actions are accomplished in the same way as the above except for the case that the sinking is judged by the sinking judgment means (h) and that the damping force of the shock absorber (c) of the rear wheel (b) is decreased in its stretched side.

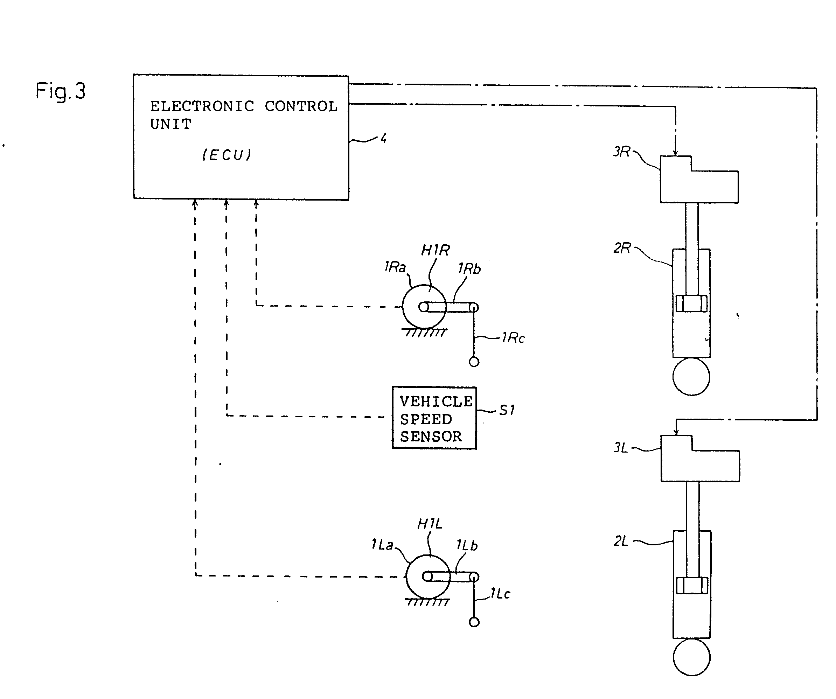

Fig. 3 concretely shows a system diagram of devices of a rear shock absorber control unit in this embodiment. A right front vehicle height sensor H1R is provided between the body and its right front wheel to detect the distance between the vehicle body and its right suspension arm, which follows the motion of the wheel. A left front vehicle height sensor H1L is provided between the vehicle body and its left wheel to detect the distance between the vehicle body and its left rear suspension arm. The short cylindrical bodies 1Ra and 1La of the vehicle height sensors H1R and H1L are secured on the vehicle body. Links 1Rb and 1Lb are extending from the center shafts of the bodies 1Ra and 1La almost perpendicularly to the center shafts. Turnbuckles 1Rc and 1Lc are rotatably coupled to the ends of the links 1Rb and 1Lb opposite to the sensor bodies. The ends of the turnbuckles 1Rc and 1Lc opposite to the links are rotatably coupled to portions of the suspension arms.

Potentiometers are built in the bodies 1Ra and 1La of the vehicle height sensors H1R and H1L so that the electric resistance of each potentiometer varies depending on the rotation of the center shaft of the body of the sensor to take out the change in the vehicle height in the form of a voltage change. Although the vehicle height sensors H1R and H1L are constructed as mentioned above, in this embodiment, plural light interrupters may be provided in the bodies 1Ra and 1La so that disks having slits coaxial with the center shaft of the vehicle height sensor turn on or off the light interrupters depending on the vehicle height thereby to detect the height.

Right and left rear shock absorbers 2R and 2L are provided in parallel with an air suspension and a suspension spring (not shown), between the vehicle body and the suspension arm. Damping force changing actuators 3R and 3L are provided for the right and left shock absorbers 2R and 2L.

An electronic control unit (ECU) 4 judges rising or sinking condition of the front wheels depending on the input signal from the vehicle height sensor H1L to sent a signal to a rear damping force changing actuator. A vehicle speed sensor S1 is provided in a speedometer to send a vehicle speed signal to the ECU 4.

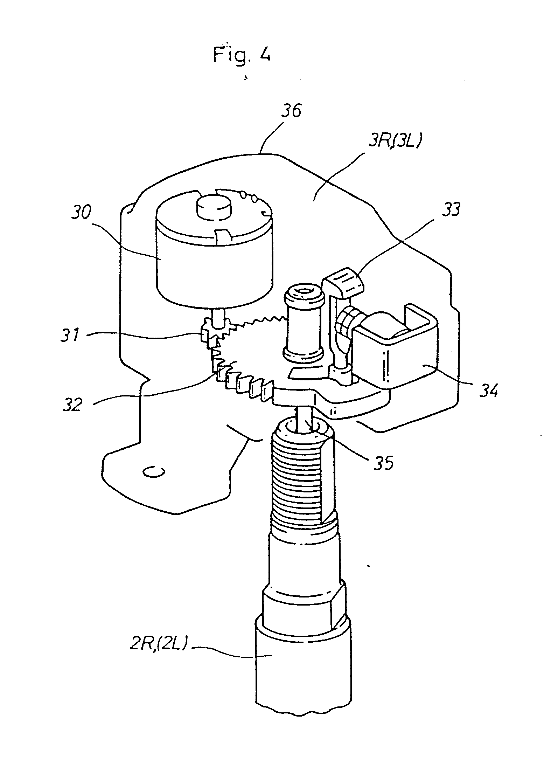

Fig. 4 shows the system of the damping force changing actuators 3R and 3L of the shock absorbers 2R and 2L. A direct current motor 30 with a pinion gear 31 at the end of the axis is provided in an actuator case 36. The pinion gear 31 is engaged with a sector gear 32 having a control rod 35 fixed in its center. When the direct current motor 30 is rotating in normal and reverse directions in accordance with the voltage of the ECU 4, the control rod 35 fixed in the center of the sector gear 32 which is engaged with the pinion gear 31 rotates in normal and reverse directions. Then, an orifice in the shock absorbers 2R and 2L are opened and closed, thereby the throttle resistance of working fluid in a shock absorber cylinder is changed to control the damping force of the shock absorbers 2R and 2L. A stopper 33 is provided with a solenoid 34, which stabilizes the position of the sector gear 32 on condition that the damping force is high.

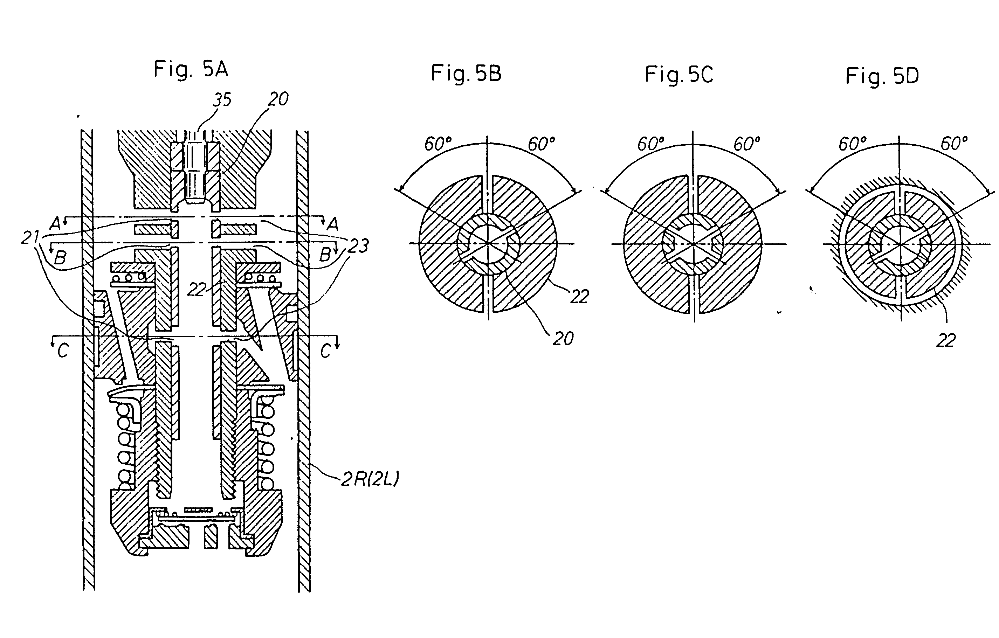

The system of the shock absorbers 2R and 2L is described based on Figs. 5A, 5B, 5C and 5D. Fig. 5A is a sectional view of the main part of the shock absorber, and Figs. 5B, 5C and 5D are cross-sectional views along a line A-A, B-B and C-C in Fig. 5A, respectively. As shown in Fig. 5A, three rotary valve orifices 21 are provided in a rotary valve 20 together with the control rod 35 rotated by the actuators 3R and 3L. In a piston rod 22, three piston rod orifices 23 are provided, and the damping force is to be changed by rotating the control rod 35 in normal and reverse directions, which results in opening and closing each of the orifices 21 and 23.

A condition of the normal damping force is shown in Figs. 6A, 6B and 6C. Fig. 6A is a sectional view of the main part of the shock absorber in shortened condition. Fig. 6B is a plan view of the shock absorber in this condition, which shows the relation between the control rod 35 and the piston rod 22. Fig. 6C is a sectional view of the main part of the shock absorber in stretched condition. In the condition of the normal damping force, both the control rod 35 and the piston rod 22 are not inclined to the front direction of the vehicle shown in an arrow head F in Fig. 6B. In this condition, the rotary valve orifice 21 and the piston rod orifice 23 are shut off. When the shock absorber is shortened the working fluid flows the passage indicated by an arrow head u shown in Fig. 6A, and when stretched, the working fluid flows the passage indicated by an arrow head v in Fig. 6C. In both cases, the damping forces of the shock absorbers 2R and 2L are kept high because of the large throttle resistance of the working fluid. A condition of low damping force is shown in Fig. 7A,7B,7C. Fig. 7A shows a main sectional view of the shock absorber in the shortened condition. Fig. 7B shows a plan view of the shock absorber in the abovementioned condition, and the relation of control rod 35 and piston rod 22. Fig. 7C shows a main sectional view of the shock absorber in the stretched condition. Actuators 3R and 3L rotate the control rod 35 to communicate the rotary valve orifice 21 with the piston rod orifice 23 if the control rod 35 forms an angle of 60 degrees to the front direction of a vehicle as shown in the arrow head F. When the shock absorber is stretching, the working fluid flows the route as shown by an arrow head u in the Fig. 7A, and when the shock absorber is sinking, the fluid flows the route as shown by the arrow head v. In both cases, the number of routes of the working fluid is increased, thereby the throttle resistance of the working fluid is lowered, which

13

results in the reduction of the damping force of the shock absorbers 2R and 2L.

The procedures in this embodiment are described as follows. Fig. 8A illustrates the state that the right and left front wheels W1R and W1L fall into the sinking 55 of the road surface 50 when the vehicle is running at the speed of V. Fig. 8B illustrates the output signals of the right and left front vehicle sensors H1R and H1L, the drive signal of the rear shock absorber damping force alteration actuators 3R and 3L, and the change of the vehicle height of the rear wheels W2R and W2L in accordance with the lapse of time in the abovementioned condition.

In Fig. 8B, t1 indicates a time on which the front wheels W1R and W1L just begin to ride on the protrusion 55 during the vehicle 45 is running on a plain surface as shown in Fig. 8A. After a time point t1, the output signals of the front vehicle height sensors H1R and H1L traverse the mean value of the vehicle height Hav, and at a time point t2, the signal reach to the obstruction detecting value Hav + h0, which is determined by adding the predetermined value h0 to the mean value Hav. At this time, the ECU 4 judges that the vehicle height data is below the predetermined limits, and generates the drive signal to the shock absorber damping force alteration actuators 3R and 3L of the right and left rear wheels W2R and W2L to decrease the damping force of the stretched side at a time point t3 soon after the time point t2. By this signal, the motor 30 of the shock absorber damping force alteration actuators 3R and 3L rotates normally, and turns the control rod 35 of the shock absorbers 2R and 2L, and communicate the orifice 21 with the orifice 23 to decrease the damping force. The abovementioned alteration means of the damping force completes at a time point t4 after the time interval Ta has elapsed since the time point t3. The drive signals to the actuators 3R and 3L are sent by a time point t5.

The rear wheels W2R and W2L begin to get over the protrusion 55 at a time t6, after the time interval Tc has elapsed since the front wheels W1R and W2L began to get over the protrusion 55. Therefore, the time point t4 for which the damping force alteration process is completed must be in advance of the time t6.

At a time point t7 after the lapse of the damping force restored time interval T0 (explained later) since the obstruction detecting time point t2, the rear wheels W2R and W2L have already passed the protrusion 55, and the vehicle is running on a plain surface. Therefore, at the time point t7, the ECU 4 generates the drive signal to the rear shock absorber damping force alteration actuators 3R and 3L for the purpose of changing the lowered damping force of the absorbers 2R and 2L to the normal condition. By this signals, the motor of the actuators 3R and 3L rotates in reverse, and turns the control rod 35 of the shock absorbers 2R and 2L, and shut off the route between the orifice 21 and 23, whereby change the damping force to the normal condition. The abovementioned damping force alteration process completes

15

at the time point t8 after the time interval Ta has elapsed since the time point t7. The drive signal to the actuators 3R and 3L is sent by a time point t9.

Nextly, the control processing to carry out the prescribed processes by utilizing the ECU 4 in this embodiment is given in the flowcharts of Fig. 9A and 9B.

As shown in Fig. 9A, when the system is started, the initialization including the memory clearance, the reset of flags, and the reset of the timers are executed in Step 100. In Step 102, the vehicle speed V is detected by the vehicle speed sensor S1. In Step 104 and 106, the present front vehicle height H and the mean value Hav are detected. In Step 108, the driving mode is judged whether or not in an automatic mode which is an option for the driver by means of a manual switchs whether or not he desires the suspension control which will be described hereinafter. Only in the case of automatic mode, the following procedures to control rear wheel shock absorbers are executed.

In Step 110, the flag F indicating the lowered condition of damping force of shock absorbers is detected. If the damping force is not in the lowered condition, it proceed to Step 112. The comparison between the present vehicle speed V detected in Step 102 and the predetermined vehicle speed V0 which indicates the running state of the vehicle, is performed in Step 112. Only in the case that the vehicle is running, the following control procedures are performed.

In Step 114, the absolute value of the difference

16

between the present front vehicle height H and the average vehicle height Hav is compared with the predetermined value h0 to judge whether or not the change of the front vehicle height traverse the predetermined range. If the absolute value traverse the predetermined range, the following control procedures are performed., As the change of the front vehicle height traverse the predetermined range in Step 116, the damping force of the rear wheel shock absorber is decreased. Therefore, the flag F indicating the lowered condition of the damping force is set, and at the same time, the timer T which detects the restored time of the damping force is started.

In Step 118, the present front vehicle height H is compared with the average vehicle height Hav to judge whether the difference is attributable to the protrusion or the sinking. In the case of the protrusion, proceed to Step 112 and drive the actuator to decrease the damping force when the rear shock absorber is shortened. In the case of sinking, proceed to Step 120 and drive the actuator to decrease the damping force when the rear shock absorber is stretched. In Step 124, the damping force restored time interval T0 as shown in Fig. 8B is calculated with due regard to the time interval between a time point the front wheel has reached a protrusion or a sinking and that the rear wheel has passed the protrusion or the sinking. The numerical formula is as follows:

T0 = WB/V + A1

WB is Wheel base

V is Present vehicle sped

A1 is Correction value with due regard to the judgment procedures and the time required to get over the obstruction.

In Step 126, the comparison between the timer T, the elapsed time since the damping force decreasing control is started and the damping force restored time interval T0 detected in Step 124 is carried out, and after the start of the damping force alteration control, the damping force is kept in the lowered condition until the time interval T0 has elapsed.

In Step 200, the flag judgment is carried out to detect whether or not the damping force decreasing control is performed by means of the time interruption routine as shown in Fig. 9B. If the abovementioned control is performed, the timer T is counted up in Step 202.

In reference to Fig. 9A, if it is judged that the damping force restored time interval T0 has elapsed by the increase of the timer T, the processing steps proceed to Step 128 to reset the timer T and the flag F which is indicating the lowered condition of the damping force. Then, proceeding to Step 130, and drive the actuator to alter the lowered damping force of the rear wheel shock absorber to the normal condition. Thereafter, the aforementioned routines are repeated.

In this embodiment, it is possible to prevent the shock and the accompanying vibration which are caused when the rear wheels are getting over the protrusion or the sinking. By

18

decreasing the damping force of the rear wheel shock absorbers before the rear wheels get over the protrusion or the sinking that the front wheels have passed, the shock and the vibration can be restrained, i.e., in the case of sinking, the damping force of the stretched side of the shock absorbers is decreased and in the case of protrusion, the damping force of the shortened side is decreased.

Furthermore, in this embodiment, the damping force which is once decreased is then restored to the nomal after the rear wheels have passed the protrusion or the sinking. Thereby, the feel of the ride when getting over the protrusion or the sinking can be improved, and also the stability and the controllability during driving on a plain surface can be assured.

While the damping force of the rear wheel shock absorbers are variable to two phases, i.e., the lowered condition and the normal condition in this embodiment, it is possible to add more phases to cope with the various degree of obstructions.

Moreover, in this embodiment, the front vehicle height sensors are separately equipped with the right and the left sides, respectively. Therefore, if either side of the front wheels gets over a protrusion or a sinking which traverse the predetermined range, the damping force of the corresponding side of the rear wheel shock absorber can be controlled to improve the feel of the ride when getting over a relatively small degree of a protrusion or a sinking.

The explanation of the embodiment in this invention is described hereinbefore. However, this invention is not restricted to this embodiment and it is possible to utilize this invention in various aspects with unsubstantial deviations from the invention.

WHAT IS CLAIMED IS:

1. A shock absorber controller for a shock absorber of a rear suspension of a vehicle having a suspension between a vehicle body and a rear wheel, comprising:

front vehicle height detection means for generating a height signal indicating the distance between the vehicle body and a front wheel;

rising judgment means for generating a rising signal indicating the vehicle is getting over a protrusion of larger scale which exceeds a predetermined range, on the basis of said front vehicle height signal;

sinking judgment means for generating a sinking signal indicating the vehicle is falling in a sinking of larger scale which exceeds another predetermined range, on the basis of said front vehicle height signal;

damping force alteration means for altering a damping force of the stretching side and the shortening side of the rear shock absorber; and

control means for controlling said damping force alteration means to decrease said damping force of the shortening side in accordance with said rising signal and to decrease said damping force of the stretching side in accordance with said sinking signal.

2. A shock absorber controller as claimed in claim 1 wherein the sock absorber controller further comprises;

restoring means for changing the damping force of the shortening side to the original condition after a predetermined time interval has elapsed since said rising signal is generated, and for changing the damping force of the stretching side to the original condition after another predetermined time interval has elapsed since said sinking signal is generated.

3. A shock absorber controller as claimed in claim 1, wherein the shock absorber controller comprises the front vehicle height detection means, the rising judgment means, the sinking judgment means, and the damping force alteration means for each of the right side and the left side of the vehicle body.

4. A shock absorber controller as claimed in claim 1, wherein said rising judgment means and said sinking judgment means generate a plurality of the rising and the sinking signals respectively in accordance with the said front vehicle height signal, and said control means decrease the damping force of the shortening side and the stretching side of the rear shock absorber to a plurality of phases in accordance with said plurality of the rising and sinking signals.

Fig.1

RISING JUDGEMENT MEANS

SINKING JUDGEMENT MEANS

CONTROL MEANS

Fig. 2

⟵ V SPEED

k

a

g          i

e          h

c

f

d          b

j

PROTRUSION

WB

WHEEL BASE

ℓ

ROAD SURFACE

2/10

0 186 908

Fig.3

ELECTRONIC CONTROL
UNIT

(ECU)

4

3R

2R

H1R

1Ra        1Rb

1Rc

VEHICLE
SPEED      S1
SENSOR

3L

2L

H1L

1La        1Lb

1Lc

3/10

0 186 908

Fig. 4

Fig. 5A

Fig.5B

Fig.5C

Fig. 5D

Fig. 6C

Fig. 6B

Fig. 6A

Fig. 7A     Fig. 7B     Fig. 7C

0 186 908

Fig. 8A

V SPEED

H1R(H1L)

W1R(W1L)

S2P(S2L)

W2R(W2L)

50 ROAD SURFACE

3R(3L)

55 PROTRUSION

WB WHEEL BASE

S1

40

45

4

8/9

0 186 908

# Fig. 8B

VEHICLE HEIGHT

OUTPUT SIGNAL OF
FRONT WHEEL VEHICLE
HEIGHT SENSOR

ACTUATOR DRIVE
SIGNAL OF VARYING
REAR WHEEL SHOCK
ABSORBER DAMPING
FORCE

VEHICLE HEIGHT

ALTERATION OF REAR
WHEEL VEHICLE HEIGHT

——— H          PRESENT VEHICLE HEIGHT
—·— Hav        AVERAGE VEHICLE HEIGHT
·····  Hav  hO    OBSTRUCTION
                 JUDGEMENT VEHICLE
                 HEIGHT

$T0$   DAMPING FORCE RESTORED TIME
$Ta$   DAMPING FORCE CHANGING TIME
$Tc$   TIME DIFFERENCE
       BETWEEN FRONT WHEEL
       AND REAR WHEEL

Fig. 9A

START

INITIALIZATION — 100

DETECT SPEED V — 102

DETECT PRESENT VEHICLE HEIGHT H — 104

DETECT AVERAGE VEHICLE HEIGHT Hav — 106

AUTO MODE? — 108 — NO

YES

F = 1 ? — 110 — YES

NO

V ≥ V0 ? — 112 — NO

H-Hav ≥ h0 — 114 — NO

YES

F=1 , T START — 116

H - Hav > 0 ? — 118 — NO

DRIVE LOW DAMPING FORCE TO SHRINKING SIDE — 122

DRIVE LOW DAMPING FORCE TO STRETCHING SIDE — 120

T0 OPERATION — 124

T ≥ T0 ? — 126 — NO

YES

F=0 , T RESET — 128

DRIVE NORMAL DAMPING FORCE — 130

RETURN

Fig. 9B
TIME INTERRUPTION ROUTINE

START

F = 1? — 200 — NO

YES

TIMER COUNT UP — 202

RETURN